# FASCICULE DE BREVET EUROPEEN

(11) **EP 2 532 038 B1**
(45) Date de publication et mention de la délivrance du brevet: **16.03.2016**
(21) Numéro de dépôt: 11701152.8
(22) Date de dépôt: 31.01.2011
(51) Int. Cl.: H01M 2/02

(54) **ACCUMULATEUR ÉLECTROCHIMIQUE AVEC EMBALLAGE COMPRENANT AU MOINS UNE FEUILLE EN POLYARYLETHERCÉTONE (PAEK), FEUILLE ET PROCÉDÉS DE RÉALISATION ASSOCIÉS**
ELEKTROCHEMISCHER AKKUMULATOR MIT GEHÄUSE MIT MINDESTENS EINEM POLYARYLETHERKETON (PAEK), ZUGEHÖRIGE FOLIE UND VERFAHREN
ELECTROCHEMICAL ACCUMULATOR WITH PACKAGING COMPRISING AT LEAST ONE POLYARYLETHERKETONE (PAEK), AND ASSOCIATED FILM AND METHODS

(30) Priorité: 02.02.2010 FR 1050726
(43) Date de publication de la demande: 12.12.2012
(73) Titulaire: Commissariat à l'Énergie Atomique et aux Énergies Alternatives, 75015 Paris (FR)
(72) Inventeur: GIROUD, Nelly, 42100 Saint Etienne (FR); ROUAULT, Hélène, 38420 Le Versoud (FR); SOLAN, Sébastien, 38170 Seyssinet-Pariset (FR)
(74) Mandataire: Ilgart, Jean-Christophe
(86) Numéro de dépôt international: PCT/EP2011/051289
(87) Numéro de publication internationale: WO 2011/095448

(56) Documents cités:
- US-A1- 2004 029 001
- US-A1- 2007 248 881
- US-B1- 6 461 757

## Description

### DOMAINE TECHNIQUE

L'invention concerne la réalisation d'un emballage d'accumulateur électrochimique comprenant au moins une feuille en polyarylethercetone (PAEK), en particulier en PEEK™.

L'application principale visée par l'invention est l'emballage d'accumulateur au lithium.

L'invention concerne en particulier une feuille intégrant dans son épaisseur au moins un plot métallique, le(s) plot(s) métallique(s) constituant les pôles de l'accumulateur.

L'invention concerne également des procédés de réalisation d'une telle feuille.

Comme expliqué par la suite, en fonction de la configuration de l'accumulateur électrochimique l'emballage visé est souple ou rigide.

### ART ANTERIEUR

Tel que représenté schématiquement, une batterie ou accumulateur lithium-ion ou A comprend usuellement une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 5, 6.

Le constituant d'électrolyte 1 peut être de forme solide, liquide ou gel. Sous cette dernière forme, le constituant peut comprendre un séparateur en polymère ou en composite microporeux imbibé d'électrolyte(s) organique(s) ou de type liquide ionique qui permet le déplacement de l'ion Lithium de la cathode 2 à l'anode 3 pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode 2 est constituée de matériaux d'insertion du cation Lithium qui sont en général composite, comme LiFePO₄, LiCoO₂, LiNi_{0.33}Mn_{0.33}Co_{0.33}O₂...

L'électrode négative ou anode 3 est très souvent constituée de carbone graphite ou en Li₄Ti₅O₁₂ (matériau titanate), éventuellement également à base de silicium ou de composite formé à base de silicium.

Le collecteur de courant 4 connecté à l'électrode positive 2 est en général en aluminium.

Le collecteur de courant 5 connecté à l'électrode négative 3 est en général en cuivre, en cuivre nickelé ou en aluminium.

Une batterie ou accumulateur lithium-ion peut comprendre bien évidemment une pluralité de cellules électrochimiques 1, 2, 3 qui sont empilées l' une sur l'autre.

Selon le type d'application visée, on cherche à réaliser soit un accumulateur lithium-ion fin et flexible soit un accumulateur rigide : l'emballage 6 est alors soit souple, soit rigide et constitue en quelque sorte un boitier.

A ce jour, les emballages souples sont fabriqués à partir d'un matériau composite multicouche constitué typiquement d'un empilement de couches d'aluminium recouvertes par un polymère. Dans la plupart, le polymère recouvrant l'aluminium est choisi parmi le polyéthylène (PE), le propylène, lc polyamide (PA) ou peut être sous la forme d'une couche adhésive constituée de polyester-polyuréthane. La société Showa Denko commercialise ce type de matériaux composite pour une utilisation en tant qu'emballage de batteries.

Le document US6,461,757B1 mentionne l'utilisation un emballage souple comprenant un empilement de couches, incluant une couche en polyarylethercetone.

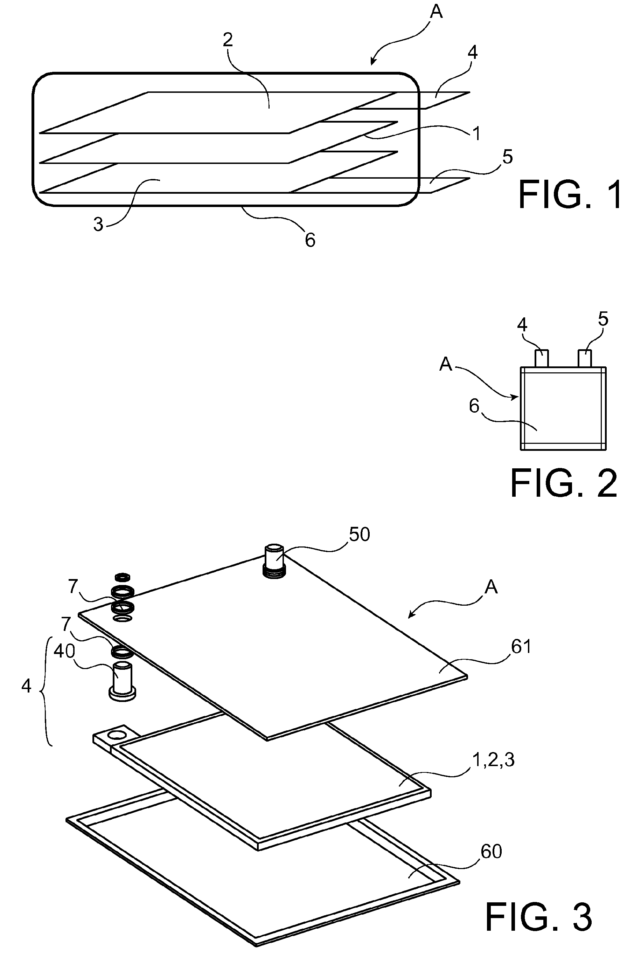

On peut se reporter à la figure 2 qui illustre ce type d'emballage souple fabriqué à partir d'une empilement de couches en aluminium fourni par la société Showa Denko sous les références N°. ADR-ON25/AL40/CPP40 ou N° ADR-ON25/AL40/CPP80. On peut voir sur cette figure 2 que l'emballage souple 6 est agencé pour contenir la(es) cellule(s) électrochimique avec étanchéité tout en étant traversé par une partie 40, 50 de deux lamelles 4, 5 formant les pôles et qui s'étendent dans le plan de la (des) cellule électrochimique.

L'inconvénient majeur de ces emballages souples est le problème d'étanchéité à long terme. En effet, les inventeurs ont pu mettre en évidence qu'au bout d'une période conséquente, typiquement de 6 mois à 1 an, il pouvait se produire une oxydation au niveau du pôle positif (collecteur de courant positif) de la batterie. Cette oxydation conduit à une ouverture de l'emballage souple ou autrement dit à une perte de l'étanchéité recherchée et en conséquence, à des fuites de l'électrolyte. Or, ces fuites peuvent être dangereuses car le produit chimique qui s'échappe alors de l'emballage peut contenir de l'acide fluorhydrique. Sous l'effet de la chaleur, l'acide fluorhydrique échappé peut conduire à l'ignition de la batterie.

Les emballages rigides sont quant à eux utilisés pour des applications plus contraignantes où l'on cherche une longue durée de vie, avec par exemple des pressions à supporter bien supérieures et un niveau d'étanchéité requis plus strict, typiquement inférieure à 10⁻⁸mbar.l/s, ou dans des milieux à fortes contraintes comme le domaine aéronautique ou spatial.

Aussi, à ce jour un emballage rigide est constitué d'un boitier métallique, typiquement en acier inoxydable (inox 316L ou inox 304), en aluminium (Al 1050 ou Al 5754) ou en titane.

Actuellement, deux types de boitier rigide sont fabriqués.

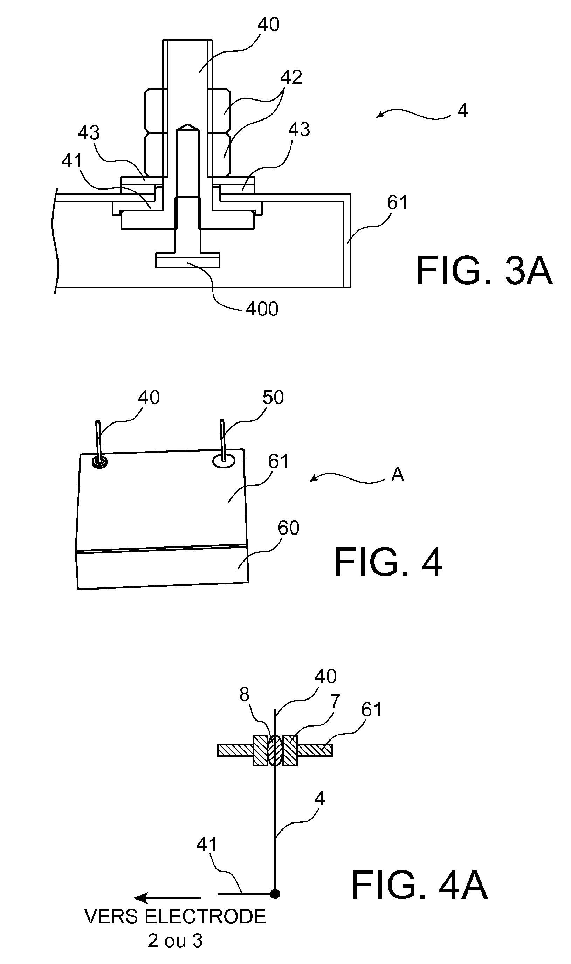

Le premier type est illustré en vue en perspective éclatée en figure 3. L'accumulateur lithium-ion représenté comprend un empilement de cellules électrochimiques 1, 2, 3 qui est logé entre le fond 60 du boitier 6 qui est une pièce usinée et le couvercle 61 du boitier 6, le couvercle 61 et le fond 60 du boitier 6 étant soudés l'un à l'autre sur leur périphérie par laser. Les collecteurs de courant 4, 5 comprennent une partie 40, 50 faisant saillie sur le dessus du boitier comme représenté en haut à droite sur la figure 3. Ces parties saillantes 40, 50 forment les pôles apparents de la batterie. Un exemple d'assemblage d'un tel collecteur de courant 4, avec le couvercle 61 d'un boitier 6 est montré en figure 3A : le collecteur 4 typiquement en inox et est inséré dans une douille 41 et fixé par vissage à l'aide de deux écrous 42 de type M5 ou M8. Deux rondelles 43 typiquement en PTFE ou en PEI, superposées l'une sur l'autre, sont intercalées entre le couvercle 61 et l'écrou 42. Ces rondelles 43 réalisent avec la douille 41 l'étanchéité et l'isolation électrique du collecteur par rapport au couvercle 41 de boitier. En outre, une vis 400 de type M2 visée dans la partie 40 sert de connecteur de courant. L'ensemble ainsi constitué est encombrant puisque la vis 40 avec la partie saillante 40 sont d'une hauteur non négligeable.

Le deuxième type est illustré schématiquement en perspective en figure 4. Le boitier rigide est ici aussi constitué avec un fond 60 usiné et un couvercle 61 soudés entre eux sur leur périphérie par laser. Par contre, comme représenté en vue de coupe schématique en figure 4A, les collecteurs de courant 4, 5 sont ici constitués en partie par des fils métalliques 40, 50 ou pions. Comme visible sur cette figure 4A, un tel pion 40 est soudé par soudure électrique ou par ultrasons à la partie 41 du collecteur de courant 4 correspondant connectée elle-même à une des électrodes de l'empilement de cellules électrochimiques. Pour réaliser l'isolation électrique avec entre le couvercle 61 métallique du boitier et le pion métallique 40, une bille de verre 8 enverre le pion 40 en constituant ainsi ce qui est communément appelée une traversée verre-métal (TVM). En outre, pour réaliser l'étanchéité avec le couvercle 61 du boitier, une bague 7 autour de la bille de verre 8 et en général dans le même métal que celui du boitier est soudée à ce dernier. Certaines configurations prévoient d'utiliser une seule TVM, le boitier constituant l'autre pôle de l'accumulateur.

Quel que soit leur type, les boitiers rigides 6, 60, 61 présentent des inconvénients non négligeables que l'on peut résumer ainsi:
- encombrement et/ou complexité de réalisation de la partie des collecteurs de courant formant les pôles de l'accumulateur,
- échauffement de l'électrolyte,
- poids élevé,
- interférences électromagnétiques avec capteurs et/ou antenne environnants,

En effet, les connectiques vissées ou les traversées verre métal (ou TVM) utilisés peuvent faire saillie du dessus du couvercle du boitier d'une hauteur allant jusqu'à 10 mm voire 15 mm.

La mise en oeuvre de la connectique à l'échelle des accumulateurs peut être difficile à réaliser.

La technologie des TVM est une technologie de pointe et il faut s'assurer d'un parfait niveau d'étanchéité: la demanderesse a d'ailleurs développé des TVM de très grande qualité pour des accumulateurs lithium-ion à haut potentiel, telles que divulguées dans la demande EP 1939957 A1. Dans certains cas, lorsqu'il faut par exemple changer le matériau du boitier, tous les éléments qui la composent (verre, pion etc...) sont à développer à nouveau.

En outre, par définition, les métaux constituant les boitiers présentent souvent une conductivité thermique élevée, ce qui est nuisible pour l'électrolyte car celui-ci ne doit pas s'échauffer, notamment au delà de 60°C. Par définition également, la masse volumique élevée des métaux constituant les boitiers peut être rédhibitoire pour certaines applications comme pour le domaine spatial où le moindre gramme embarqué a son importance.

Par ailleurs, dans le cas où la batterie n'est qu'un composant d'un système plus complexe dans lequel il y a des capteurs et une antenne environnants, il faut, à titre préventif, placer ces derniers à une distance non négligeable du boitier métallique de la batterie afin d'éviter les interférences électromagnétiques.

Le but de l'invention est alors de proposer une nouvelle solution d'emballage universelle pour les accumulateurs électrochimiques, c'est-à-dire qui puisse résoudre à la fois les inconvénients des emballages souples et rigides des accumulateurs électrochimiques actuellement existants.

Le but de l'invention est donc de proposer à la fois une solution d'emballage d'accumulateurs électrochimiques souple, c'est-à-dire flexible, qui ne présente pas de problème d'étanchéité à long terme et d'emballage d'accumulateurs électrochimiques rigide de poids moindre, qui ne risque pas d'induire des interférences électromagnétiques et un échauffement de l'électrolyte et qui s'affranchisse de la complexité de réalisation et/ou de l'encombrement de la partie des collecteurs de courant formant les pôles.

### EXPOSÉ DE L'INVENTION

Pour ce faire, l'invention a tout d'abord pour objet un accumulateur électrochimique comprenant au moins une cellule électrochimique constituée d'au moins une anode et une cathode de part et d'autre d'un électrolyte, deux collecteurs de courant constitués chacun d'une lamelle dont une reliée à l'anode et l'autre à la cathode, et un emballage agencé pour contenir la(es) cellule(s) électrochimique avec étanchéité tout en étant traversé par une partie des lamelles formant les pôles qui s'étendent dans le plan de la (des) cellule(s) électrochimique, caractérisé en ce que l'emballage est constitué d'au moins une feuille en polyarylethercetone (PAEK).

Selon ce mode de l'invention, l'emballage est constitué d'une seule feuille en (PAEK) repliée sur elle-même en deux parties solidarisées entre elles sur leur périphérie.

L'invention a également pour objet un accumulateur électrochimique comprenant au moins une cellule électrochimique constituée d'au moins une anode et une cathode de part et d'autre d'un électrolyte, deux collecteurs de courant constitués chacun d'une lamelle dont une reliée à l'anode et l'autre à la cathode, et un emballage agencé pour contenir la(es) cellule(s) électrochimique avec étanchéité tout en étant traversé par une partie des lamelles formant les pôles qui s'étendent dans le plan de la (des) cellule(s) électrochimique, caractérisé en ce que l'emballage est constitué d'au moins une feuille en polyarylethercetone (PAEK). Selon cet autre mode de réalisation, l'emballage est constitué d'une pluralité de feuilles en polyarylethercetone (PAEK) solidarisées entre elles sur leur périphérie.

La(es) feuille(s) de l'emballage sont de préférence en polyétheréthercétone (PEEK™).

L'invention a également pour objet un accumulateur électrochimique comprenant au moins une cellule électrochimique constituée d'au moins une anode et une cathode de part et d'autre d'un électrolyte, deux collecteurs de courant dont un est relié à l'anode et l'autre à la cathode, et un emballage agencé pour contenir la(les) cellule(s) électrochimique avec étanchéité tout en étant traversé par une partie des collecteurs de courant formant les pôles, caractérisé en ce que l'emballage comporte au moins une feuille en polyarylethercetone (PAEK) intégrant dans son épaisseur au moins un plot métallique constituant l'un des pôles de l'accumulateur, ledit plot étant soudé à la partie d'un collecteur de courant contenue à l'intérieur de l'emballage.

Selon une variante de réalisation, l'emballage est constitué d'une seule feuille en polyarylethercetone (PAEK) intégrant dans son épaisseur deux plots métalliques constituant les deux pôles de l'accumulateur, ladite feuille étant repliée sur elle-même en deux parties solidarisées entre elles sur leur périphérie, chacun des deux plots étant soudé à la partie d'un collecteur de courant contenue à l'intérieur de l'emballage.

Selon une autre variante de réalisation, l'emballage est constitué d'une feuille en polyarylethercetone (PAEK) intégrant dans son épaisseur deux plots métalliques constituant les deux pôles de l'accumulateur et d'une feuille en polyarylethercetone (PAEK) dépourvue de plots métalliques et solidarisée à sa périphérie à la feuille en PAEK intégrant les deux plots métalliques, chacun des deux plots étant soudé à la partie d'un collecteur de courant contenue à l'intérieur de l'emballage.

Selon une autre variante de réalisation, l'emballage est constitué de deux feuilles en polyarylethercetone (PAEK) intégrant chacune dans son épaisseur un plot métallique constituant l'un des deux pôles de l'accumulateur, chacun des deux plots étant soudé à la partie d'un collecteur de courant contenue à l'intérieur de l'emballage.

Lorsque l'emballage est constitué de deux feuilles en polyarylethercetone (PAEK), on peut avantageusement choisir leur épaisseur unitaire telle qu'elles sont rigides, l'une des feuilles étant usinée pour constituer un fond de boitier pour contenir la cellule électrochimique, l'autre des feuilles intégrant les plots métalliques constituant le couvercle du boitier.

De préférence, la(les) feuille(s) de l'emballage sont en polyétheréthercétone (PEEK™).

L'un des plots métalliques peut être en aluminium soudé à la partie interne du collecteur de courant elle-même en aluminium et reliée à la cathode.

L'un des plots métalliques peut être également en cuivre soudé à la partie interne du collecteur de courant elle-même en cuivre et reliée à l'anode.

Les deux parties d'une feuille en PAEK repliée sur elle-même ou les deux feuilles en PAEK peuvent être solidarisées entre elles par auto collage, soudure, ultrasons, laser ou par thermo scellage.

L'accumulateur décrit ci-dessus constitue avantageusement un accumulateur lithium-ion.

L'invention concerne également une feuille en polyarylethercetone (PAEK) intégrant dans son épaisseur au moins un plot métallique, et notamment intégrant dans son épaisseur deux plots métalliques.

De préférence, la feuille est en polyétheréthercétone (PEEK™).

Le métal du (des) plot(s) peut être choisi parmi Al, Cu, CuNi, Ti, Pt, Ag, Au, inox, ou des alliages constitués de ces métaux.

Selon une alternative, le(s) plot(s) métallique fait (font) saillie d'une hauteur au plus égale à 1mm, typiquement 250 µm par rapport à au moins une des faces de la feuille.

De préférence, le(s) plot(s) métallique a (ont) une hauteur sensiblement égale à l'épaisseur de la feuille.

Le(s) plot(s) métallique peu(ven)t avoir une section droite circulaire, parallélogramme ou carrée.

L'invention concerne également un procédé de réalisation d'une feuille en polyarylethercetone (PAEK) intégrant dans son épaisseur au moins un plot métallique, selon lequel on réalise les étapes suivantes :
a/ réalisation d'une ouverture dans l'épaisseur d'au moins une feuille en polyarylethercetone (PAEK),
b/ cryogénisation d'un barreau métallique (9) pour réduire sa section droite à des dimensions inférieures à celles de l'ouverture,
c/ introduction du barreau cryogénisé dans l'ouverture de la feuille en polyarylethercetone (PAEK),
d/ maintien du barreau cryogénisé dans l'ouverture de la feuille à la température ambiante pour obtenir son ajustement avec serrage,
e/ coupure selon sa section droite du barreau dilaté et ajusté avec serrage dans l'ouverture de la feuille afin de constituer le plot métallique.

La feuille à réaliser est de préférence en polyétheréthercétone (PEEK™).

L'étape e/ peut être réalisée au moyen d'un fil.

L'étape a/ peut être réalisée dans une seule feuille d'épaisseur telle qu'elle est rigide.

Avantageusement, on réalise :
- l'étape c/ jusqu'à réaliser une connexion avec une partie de collecteur de courant agencée du côté de la feuille rigide opposé à celui de l'introduction du barreau,
- l'étape d/ en maintenant la connexion du barreau avec le collecteur de courant,
- l'étape e/ en coupant le barreau uniquement du côté de la feuille par lequel le barreau est introduit, le plot intégré à la feuille étant ainsi en outre connecté en permanence avec la partie de collecteur de courant.

L'étape a/ peut réalisée dans un empilement de feuilles d'épaisseur unitaire telles qu'elles sont souples, un intercalaire rigide étant interposé entre deux feuilles souples.

L'invention concerne enfin un procédé de réalisation d'une feuille en polyarylethercetone (PAEK) intégrant dans son épaisseur au moins un plot métallique, selon lequel on réalise les étapes suivantes :
a/ réalisation d'un premier morceau de feuille en polyarylethercetone (PAEK),
b/ collage d'un deuxième morceau de feuille en polyarylethercetone (PAEK) sur le pourtour d'une feuille métallique,
c/ superposition du premier morceau de feuille en polyarylethercetone (PAEK) sur la feuille métallique de telle manière à obtenir un chevauchement entre les deux morceaux de feuille de polyarylethercetone (PAEK),
d/ solidarisation par soudure ultrasons entre les deux morceaux de feuille de polyarylethercetone (PAEK) chevauchées.

La feuille à réaliser est de préférence en polyétheréthercétone (PEEK™).

Les inventeurs ont pensé judicieusement à utiliser le PAEK et plus particulièrement le PEEK™ en tant que constituant d'emballage d'accumulateurs électrochimiques, et plus particulièrement d'accumulateurs lithium-ion.

En effet, les inventeurs connaissent cette famille de matériaux et en particulier le PEEK™, et en listant leurs caractéristiques avantageuses comme ci-dessous, ils ont pensé qu'il (s) serai(en)t tout à fait adaptés pour réaliser un emballage soit souple soit rigide d'un accumulateur lithium-ion.

Les caractéristiques avantageuses de la famille PAEK peuvent être ainsi définies:
- performance à hautes températures : maintien de ses propriétés lorsqu'il est exposé à une vaste gamme de températures,
- solidité mécanique et stabilité dimensionnelle : excellente solidité, rigidité, résistance au fluage et à la fatigue sur le long terme,
- résistance à l'usure : résistance élevée à l'usure et au découpage et faible coefficient de frottement,
- résistance chimique : résistant à une vaste gamme de produits chimiques à des températures élevées dans des environnements hostiles et notamment aux produits très corrosifs utilisés dans le domaine de l'aéronautique (tels que le skydrol®),
- résistance à l'hydrolyse : faible absorption d'humidité, résistant au ruissellement, à l'eau et à la saumure, avec faible perméabilité,
- performance électrique: retardateur de flammes naturel avec propriétés électriques maintenues sur une gamme de fréquences et de températures très large,
- pureté : pureté inhérente avec faible production de particules et faible dégazage ce qui est intéressant pour application sous vide ou à faibles pression,
- recyclabilité.

Par ailleurs, par rapport aux matériaux d'emballages rigides d'accumulateur lithium-ion selon l'état de l'art, tels que décrit en préambule, les inventeurs ont pensé que la conductivité thermique et la masse volumiques intrinsèques au PEEK™ permettraient de résoudre efficacement les problèmes respectivement d'échauffement de l'électrolyte et de poids.

Le tableau ci-dessous est une synthèse comparative de ces grandeurs entre les matériaux des boitiers rigides selon l'état de l'art (acier inoxydable, aluminium, titane) et le PEEK™ :

| | Conductivité thermique W.m⁻¹.K⁻¹ | Masse volumique (g.cm⁻³) |
|---|---|---|
| Acier inoxydable | 26 | 7.8 |
| Aluminium | 237 | 2.7 |
| Titane | 21.9 | 4.5 |
| PEEK™ | 0.25-0.92 | 1.2-1.4 |

Ce tableau illustre les avantages thermiques et de poids du PEEK™ pour constituer un emballage rigide d'accumulateur au lithium-ion.

Cela étant, en balayant les très nombreux domaines variés d'utilisation du PEEK™ (aéronautique, automobile, semi-conducteur, électronique, médical, agro-alimentaire, militaire), les inventeurs ont constaté que ce matériau n'a jamais été utilisé en tant que constituant d'emballage de pièces.

Pour constituer un emballage souple satisfaisant, les inventeurs ont alors pensé que pour obtenir un emballage parfaitement étanche, il fallait mieux réaliser une auto-adhésion entre feuilles de PEEK™ au lieu de rajouter une couche spécifique d'adhésif qui imposerait nécessairement une vérification de compatibilité avec le PEEK™.

Ils ont alors pensé à faire subir à ce type de feuilles un traitement plasma qui a pour effet la modification de la structure des surfaces traitées, le greffage de liaisons chimiques favorisant la mouillabilité et l'attraction interfaciale, voire la création de nouvelles liaisons chimiques par scission des chaînes moléculaires.

Ils ont pu constater qu'un tel traitement plasma conférait des caractéristiques de collage tout-à-fait appropriées. Ainsi, une résistance du collage après traitement plasma a pu être évaluée aux environs de 5MPa.

L'auto collage étant atteint, il restait une inconnue importante pour savoir définitivement si des feuilles de PEEK™ rendues autocollantes pouvaient conserver ce caractère adhésif au contact d'un électrolyte de cellule électrochimique. Les inventeurs ont alors fait le test suivant. Une feuille de PEEK autocollant a été placée dans un électrolyte liquide constitué du mélange suivant :
- EC/PC/DMC (EC : carbonate d'éthylène, PC : carbonate de propylène, DMC : carbonate de diméthyle),
- avec un ajout de 2% en masse de VC (VC : carbonate de vinylène) dans lequel est dissoute une quantité de 1 mol.L⁻¹ de LiPF₆.

Le contact direct entre la feuille de PEEK™ et l'électrolyte a été maintenu pendante une durée de quinze jours. De manière inattendue, l'auto adhésion de la feuille de PEEK™ a été complètement maintenue. En outre, des prototypes d'emballage souple avec des feuilles de PEEK™ d'épaisseur de 12µm tels que celui représenté en figure 4 ont parfaitement conservé leur étanchéité.

Pour constituer un emballage rigide, les inventeurs se sont demandé comment le choix de feuilles rigides en PEEK™ pouvait résoudre le problème d'encombrement et/ou de complexité de réalisation de la partie des collecteurs de courant formant les pôles.

Ils ont alors envisagé d'intégrer des plots métalliques constituant ces pôles dans l'épaisseur d'une feuille en PEEK™.

Par les deux procédés imaginés respectivement de cryogénisation de barreaux métalliques et insertion dans une feuille en PEEK™ et de collage de morceaux de feuille par ultrasons, ils ont pu réaliser une intégration mécanique parfaite de plots en cuivre et en aluminium. Ainsi, la partie des collecteurs de courant formant les pôles peut se faire sans avoir recours à des TVM, ce qui permet d'obtenir une batterie complètement plate dont toute la surface peut-être réutilisée. Par ailleurs, des batteries rigides et d'une épaisseur inférieure à 1 mm peuvent être réalisées puisque l'on s'affranchit de la technologie des TVM ou des connectiques vissées.

Par cette technique d'intégration par cryogénisation d'un barreau métallique avec insertion dans une ouverture de feuille en PEEK™ il est également envisageable d'emprisonner du cuivre ou de l'aluminium dans une feuille en PEEK™ de très faible épaisseur (<30 µm). La variante du procédé décrite ci-dessus avec agencement d'un intercalaire rigide entre deux feuilles souples de très faible épaisseur unitaire permet ainsi de manière inattendue de concevoir des emballages souples d'accumulateur électrochimiques avec des pôles qui ne dépassent pas du plan de la (des) cellule (s) électrochimique(s). Autrement dit, en réalisant des plots intégrés sur la hauteur on peut réduire les dimensions de longueur et de largeur d'un accumulateur électrochimique emballé par un emballage souple.

Un autre avantage lié à l'utilisation de feuille en PEEK™ rigide en tant qu'emballage rigide d'accumulateurs électrochimiques est que l'on peut réduire encore plus l'encombrement de systèmes complexes alimentés par de tels accumulateurs. Ainsi, par exemple, on peut coller directement des antennes ou capteurs sur le boitier rigide sans risque d'interférences électromagnétiques.

La famille de polymères polyarylethercetone (PAEK) qui convient dans le cadre de l'invention comprend les polymères suivants :
- PEK,
- PEEK™,
- PEKK,
- PEEKK,
- PEKEKK (polyetherketoneetherketoneketone).

### BRÈVE DESCRIPTION DES DESSINS

D'autres avantages et caractéristiques de l'invention peuvent ressortir à la lecture de la description détaillée faite à titre illustratif et non limitatif en référence aux figures suivantes qui représentent respectivement:
- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue schématique en perspective éclatée montrant les différents éléments d'un accumulateur lithium-ion A avec un premier type d'emballage rigide selon l'état de l'art,
- la figure 3A est une vue de détail en coupe d'une partie de l'accumulateur A selon la figure 3,
- la figure 4 est une vue schématique en perspective éclatée montrant les différents éléments d'un accumulateur lithium-ion A avec un deuxième type d'emballage rigide selon l'état de l'art,
- la figure 4A est une vue de détail en coupe d'une partie de l'accumulateur selon la figure 4,
- la figure 5 est une vue de face montrant un accumulateur lithium-ion avec un emballage souple selon l'invention comprenant des feuilles en PEEK™ auto collées,
- la figure 6 est une vue schématique en perspective éclatée montrant une étape de réalisation de feuilles souples en PEEK™ intégrant un plot métallique conforme à l'invention,
- la figure 6A est une vue schématique en perspective éclatée montrant les différents éléments d'un accumulateur lithium-ion A avec un emballage souple selon l'invention comprenant une feuille en PEEK™ fabriquée conformément à la figure 6,
- la figure 7 est une vue schématique en perspective éclatée montrant une étape de réalisation d'une feuille rigide en PEEK™ intégrant un plot métallique conforme à l'invention,
- la figure 7A est une vue schématique en perspective éclatée montrant les différents éléments d'un accumulateur lithium-ion A avec un emballage rigide selon l'invention comprenant une feuille en PEEK™ fabriquée conformément à la figure 7,
- la figure 8 est une vue de face montrant une feuille rigide en PEEK™ fabriquée conformément à la figure 7,
- la figure 8A est une vue en coupe selon l'axe AA de la feuille rigide en PEEK™ selon la figure 8,
- la figure 8B est une vue en perspective de la feuille rigide en PEEK™ selon la figure 8,
- la figure 9 montre un morceau de feuille en PEEK™ réalisé selon l'invention :
- la figure 10 montre différentes intégrations possibles de plots métalliques dans une feuille en PEEK™ selon l'invention.

### EXPOSÉ DÉTAILLÉ DE MODES DE RÉALISATION PARTICULIERS

Les figures 1 et 4 sont relatives à des accumulateurs lithium-ion A avec emballages souples et rigides selon l'état de l'art : ils ont été commentés en préambule et ne seront donc pas plus détaillés par la suite.

Par souci de clarté, les mêmes éléments de l'état de l'art et selon l'invention sont désignés par les mêmes références.

Dans le contexte de l'invention, une feuille en PEEK™ est considérée comme souple si son épaisseur est inférieure approximativement à 200 µm et rigide lorsqu'elle est supérieure à 200 µm.

En effet, la raideur en flexion d'une feuille en PEEK™ dépend de son module de Young et également du moment d'inertie de sa section, ce dernier étant proportionnel à l'épaisseur.

En caractérisant le polymère PEEK avec les grandeurs caractéristiques suivantes :
Densité: 1320 kg/m³,
Module d'Young : 3,7 Gpa,
Limite élastique (σt) : 92 Mpa,
on peut considérer ainsi, que compte tenu de l'application (emballage d'accumulateur électrochimique) et donc des autres dimensions nécessaires (longueur de 20 à 200mm et largeur de 10 à 200mm), une feuille en PEEK d'épaisseur unitaire inférieure à approximativement 200 µm constitue une partie d'emballage souple tandis qu'une feuille en PEEK d'épaisseur unitaire supérieure à approximativement 200 µm constitue une partie d'emballage rigide.

Cela étant, l'homme de l'art peut choisir le type de polymères PEEK™ existant en fonction du module d'Young recherché pour la rigidité.

Ainsi, on peut considérer qu'une feuille réalisée à partir d'un PEEK™ à structure semi-cristalline est rigide lorsque son module d'Young est supérieur ou égal à 2,2 ± 0,2 GPa. De même, on peut considérer qu'une feuille en PEEK™ amorphe est rigide lorsque son module d'Young est supérieur ou égal à 1,7 ± 0,2 GPa. D'autres PEEK™ existants dont le module d'Young est compris entre 3,5 GPa et 23 GPa, et le module de flexion est compris entre 3,1 GPa et 20 GPa et une limite élastique comprise entre 150 et 250 MPa peuvent tout à fait être choisis dans le cadre de l'invention.

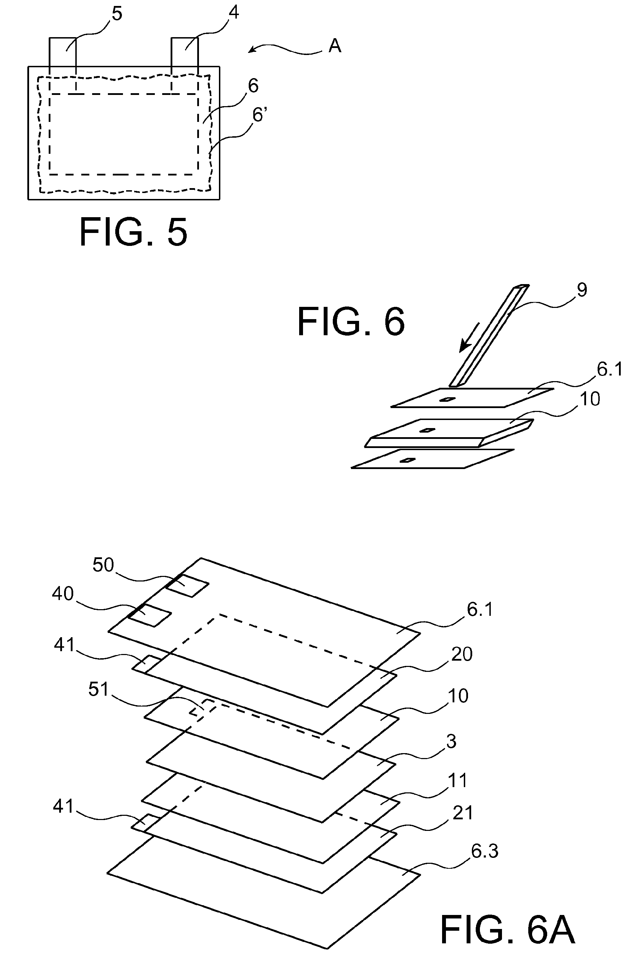

La figure 5 montre un accumulateur lithium-ion avec un emballage souple A selon l'invention comprenant une pluralité de feuilles 6 en PEEK™ auto collées sur leur périphérie 6'. Pour rendre adhésif ces feuilles 6, on a fait subir un traitement plasma à des feuilles en PEEK™ découpées à partir d'un film en PEEK™ brut d'épaisseur de 12µm.

Non seulement le caractère adhésif des feuilles en PEEK™ ainsi traitées par plasma s'est révélé satisfaisant mais en outre cette adhérence ne s'est pas dégradée lorsque les feuilles ont été placées dans un bain d'électrolyte.

La figure 6 représente une étape d'un procédé de réalisation de feuilles souples en PEEK™ selon l'invention. Chaque feuille 6.1, 6.2 est percé**e** d'une ouverture. On vient intercaler un intercalaire rigide 10 également percé d'une ouverture entre ces feuilles souples 6.1, 6.2 et en correspondance des ouvertures, afin de les maintenir mécaniquement lors de l'introduction d'un barreau 9 en cuivre ou en aluminium ayant subi une cryogénisation à l'azote liquide.

On réalise ensuite le maintien du barreau cryogénisé 10 dans l'ouverture des feuilles 6.1 6.2 à la température ambiante pour obtenir son ajustement avec serrage.

On réalise alors une coupure au niveau de chaque feuille selon la section droite du barreau afin de constituer un plot métallique 40 ou 50 intégré dans l'épaisseur de chaque feuille 6.1, 6.2.

En figure 6A, on a représenté un emballage souple réalisés à partir d'une feuille en PEEK intégrant les deux plots 40, 50 dans son épaisseur soudée à une autre feuille en PEEK non perforée. La soudure est de type par ultrason pour garantir la continuité de la matière PEEK/PEEK sur la périphérie et donc l'étanchéité de l'accumulateur lithium ion. L'accumulateur représenté comprend deux cellules électrochimiques avec deux cathodes 20, 21, deux séparateurs électrolytes 10, 11 et une anode commune 3.

Par la suite, afin d'être sûr de la connexion entre les plots 40, 50 et la partie 41, 51 des collecteurs de courant internes à l'emballage, on a réalisé des pointes de soudures électrique ou par ultrasons entre elles (soudure cuivre/cuivre ou aluminium/aluminium).

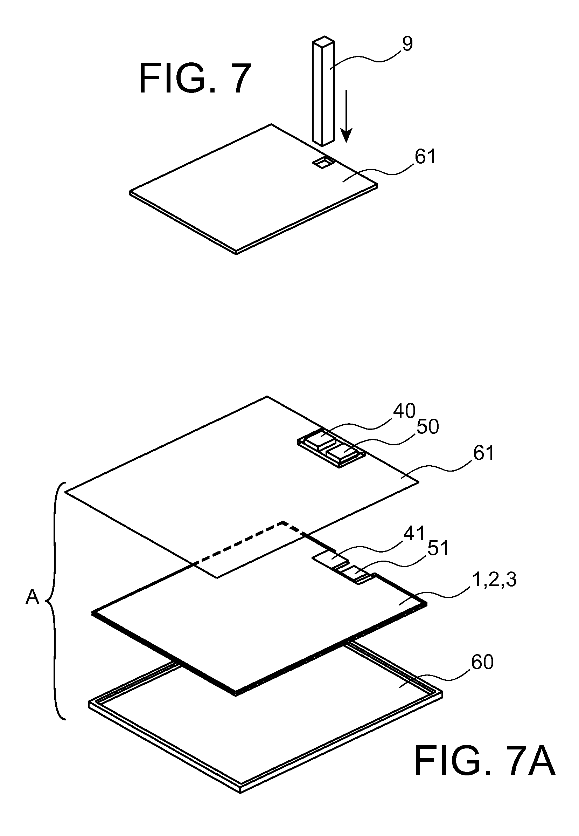

La figure 7 illustre la même étape que l'étape selon la figure 6 mais dans pour réaliser une feuille rigide en PEEK 61. Ici, l'épaisseur de la feuille rigide est au moins égale à 200 µm et il n'y a donc pas besoin d'intercalaire lors de l'insertion du barreau 9 cryogénisé.

Comme représenté en figure 7A, la feuille rigide en PEEK 61 ainsi réalisée constitue un couvercle de boitier comprenant un fond 60 également en PEEK usiné, le fond 60 et le couvercle 61 étant soudés entre eux par ultrasons. Le boitier 6 ainsi réalisé constitue un emballage rigide de l'accumulateur A, les plots 40, 50 intégrés dans l'épaisseur du couvercle 61 étant connectés à la partie interne respectivement 41, 51 des collecteurs de courant eux-mêmes connectés chacun à l'une des électrodes 2,3. L'accumulateur représenté ici comprend une seule cellule électrochimique 1, 2, 3.

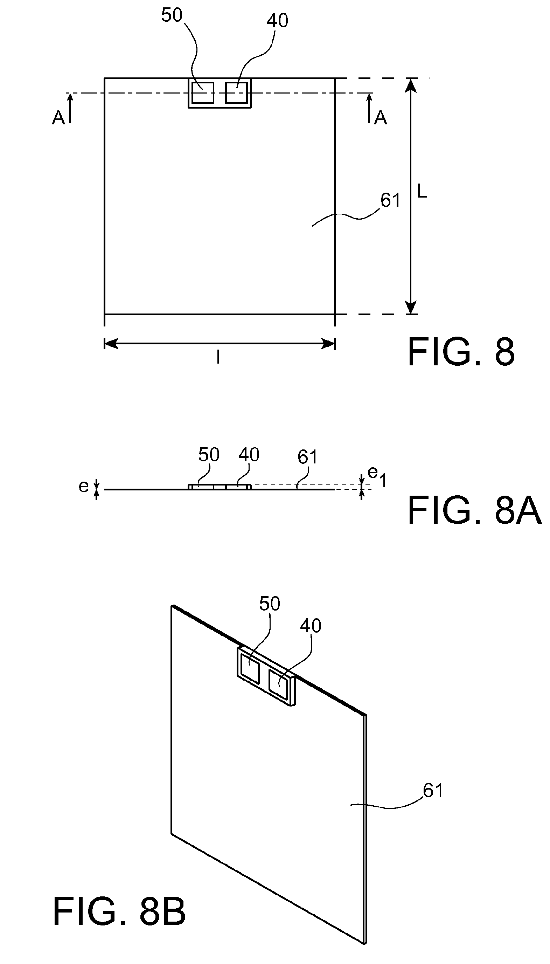

Comme montré aux figures 8 et 8B, les dimensions types du couvercle 61 en PEEK selon l'invention sont :
e = 200 µm,
e1 = 700 µm,
1 de 20mm à 200mm,
L de 10mm à 200mm.

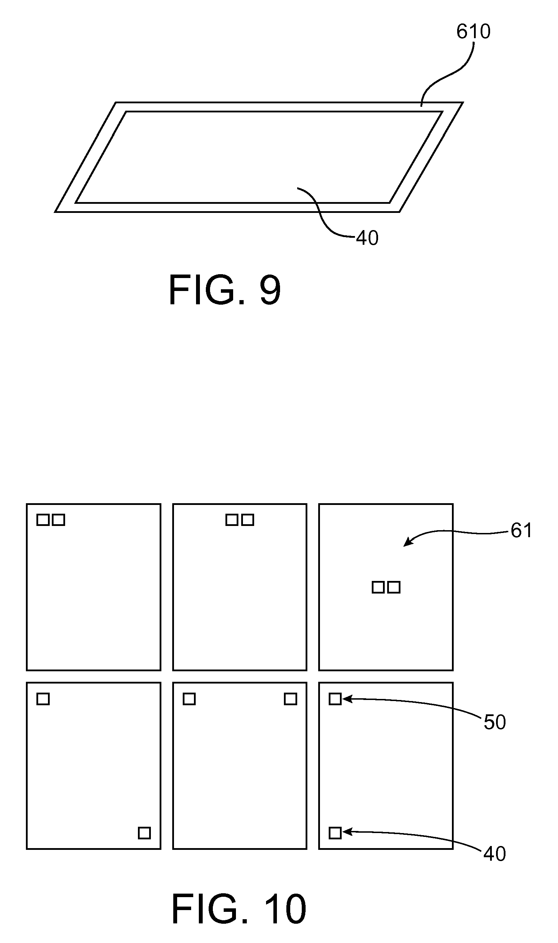

La figure 9 illustre une étape d'un autre mode de réalisation d'une feuille en PEEK selon l'invention : on réalise une adhésion d'un morceau 610 de feuille PEEK adhésif sur une feuille métallique 40 constituant un plot selon l'invention. Puis on vient réaliser une soudure par ultrason de type PEEK/PEEK sur un autre morceau de feuille en PEEK au niveau d'une ouverture.

Dans les modes de réalisation décrits ci-dessus, les plots métalliques peuvent être de différentes formes, simple points (disque de très faible diamètre) ou plus gros selon la capacité de la batterie. Ils peuvent aussi avoir des formes de parallélogramme ou de carrée.

En figure 10, on a représenté différentes intégrations des deux plots métalliques 40, 50 dans le couvercle rigide 61 en PEEK™ du boitier.

Les emballages souples ou rigides qui viennent d'être décrits peuvent concerner les batteries au lithium primaire c'est-à-dire avec l'électrode négative constituée de lithium métal. Dans ce cas, le plot métallique 50 correspondant est de préférence en cuivre. L'électrode positive peut être en oxyde de manganèse par exemple (MnO₂).

Comme décrit ci-dessus, elles peuvent aussi bien concerner les accumulateurs lithium-ion que les batteries au lithium secondaire.

Ainsi, les différents couples d'électrodes peuvent être emballés conformément à l'invention :
1. Electrode négative : carbone graphite Electrode positive : LiFePO₄,
2. Electrode négative : carbone graphite Electrode positive : LiNi_{0.33}Mn_{0.33}Co_{0.33}O₂
3. Electrode négative : carbone graphite, Electrode positive : LiNiₓCo_{y}Al_{z}O₂ avec x+y+z =1,
4. Electrode négative : carbone graphite, Electrode positive : LiMnO₂,
5. Electrode négative : carbone graphite, Electrode positive : LiNiO₂,
6. Electrode négative : titanate Li₄Ti₅O₁₂, Electrode positive : LiFePO₄.

Les batteries dites d'énergie ou de puissance peuvent tout à fait être emballées par des emballages souples ou rigides selon l'invention.

Les batteries de type NiMH peuvent également être emballées par des emballages souples ou rigides selon l'invention.

Des batteries Li-ion comprenant une électrode à base d'un matériau formé d'un composite carbone-silicium sont également susceptibles d'être mises en oeuvre dans le cadre de l'invention.

Tous les séparateurs d'électrolyte peuvent convenir à l'emballage souple ou rigide selon l'invention.

Il peut s'agir de séparateurs en polymères microporeux tels que le polyéthylène (PE), le polypropylène (PP), le poly (tetrafluoroethylene) (PTFE), poly (vinyl chloride) (PVC), le polyfluorure de vinylidène (PvdF). Le polypropylène et le polyéthylène utilisés peuvent l'être sous forme de films fabriqués par extrusion suivi d'un étirement ou d'une étape de laminage. Il peut s'agir également de séparateurs monocouches en PE ou PP ou sous la forme de plusieurs couches superposées de polyoléfine (PE/PP/PE par exemple).

Il peut s'agir également de séparateurs dits « composite » réalisés sous la forme d'une couche de polymères, tels que le polyéthylène téréphtalate (PET), de très faible épaisseur, de l'ordre de 15 µm ensuite recouverte de grains de céramiques en alumine (Al₂O₃) et de silice (SiO₂).

Il peut s'agir également de séparateurs à base de fibre de verre non tissées noyées dans un polymère pour renforcer leur stabilité mécanique très faible.

Il peut s'agir enfin de séparateurs en céramique, tels que l'alumine.

D'autres modes de réalisation peuvent être prévus sans pour autant sortir du cadre de l'invention, à savoir proposer un emballage d'accumulateur électrochimique comprenant au moins une feuille en PAEK, tel que le PEEK™.

Ainsi, bien que dans les modes de réalisation illustrés en détail aux figures 5 à 10, la solution d'emballage avec au moins un plot métallique intégré dans l'épaisseur d'une feuille en PEEK™ concerne les emballages que l'on souhaite rigides, elle peut tout aussi bien s'appliquer aux emballages que l'on souhaite souples.

De même, alors que dans les figures 6A, 7A, 8, 8A, 8B et 10, les deux plots métalliques 40, 50 sont prévus intégrés dans l'épaisseur d'une même feuille en PEEK™ et agencés sur une même face de l'accumulateur, on peut tout aussi prévoir un agencement d'un plot sur une face de l'accumulateur et le deuxième plot sur l'autre face de l'accumulateur.

Comme dit précédemment, une seule feuille souple en PEEK™ peut suffire pour réaliser l'emballage d'un accumulateur électrochimique. Les feuilles en PEEK™ actuellement commercialisées d'épaisseur unitaire de 12µm, 30 µm, 70 µm conviennent dans le cadre de l'invention. On peut réaliser une solidarisation de plusieurs feuilles de ces gammes d'épaisseur entre elles afin d'augmenter la résistance mécanique de l'emballage.

## Revendications

1. Accumulateur électrochimique (A) comprenant au moins une cellule électrochimique constituée d'au moins une anode et une cathode de part et d'autre d'un électrolyte, deux collecteurs de courant constitués chacun d'une lamelle dont une (4) reliée à l'anode et l'autre (5) à la cathode, et un emballage agencé pour contenir la(es) cellule(s) électrochimique avec étanchéité tout en étant traversé par une partie des lamelles formant les pôles qui s'étendent dans le plan de la (des) cellule(s) électrochimique, dans lequel l'emballage est constitué d'une seule feuille en polyarylethercetone (PAEK) repliée sur elle-même en deux parties solidarisées entre elles sur leur périphérie.

2. Accumulateur électrochimique (A) comprenant au moins une cellule électrochimique constituée d' au moins une anode et une cathode de part et d'autre d'un électrolyte, deux collecteurs de courant constitués chacun d'une lamelle dont une (4) reliée à l'anode et l'autre (5) à la cathode, et un emballage agencé pour contenir la(es) cellule(s) électrochimique avec étanchéité tout en étant traversé par une partie des lamelles formant les pôles qui s'étendent dans le plan de la (des) cellule (s) électrochimique, dans lequel l'emballage est constitué d'une pluralité de feuilles (6) en polyarylethercetone (PAEK) solidarisées entre elles sur leur périphérie (6').

3. Accumulateur électrochimique (A) selon la revendication 1 ou 2, comportant au moins une feuille en polyarylethercetone (PAEK) (6.1, 6.2, 6.3) intégrant dans son épaisseur au moins un plot métallique (40, 50) constituant l'un des pôles de l'accumulateur, ledit plot étant soudé à la partie (41, 51) d'un collecteur de courant contenu à l'intérieur de l'emballage.

4. Accumulateur électrochimique (A) selon la revendication 3, dans lequel l'emballage est constitué d'une seule feuille en polyarylethercetone (PAEK) intégrant dans son épaisseur deux plots métalliques constituant les deux pôles de l'accumulateur, ladite feuille étant repliée sur elle-même en deux parties solidarisées entre elles sur leur périphérie, chacun des deux plots étant soudé à la partie d'un collecteur de courant contenue à l'intérieur de l'emballage.

5. Accumulateur électrochimique (A) selon la revendication 3, dans lequel l'emballage est constitué d'une feuille en polyarylethercetone (PAEK) (6.1, 61) intégrant dans son épaisseur deux plots métalliques (40, 50) constituant les deux pôles de l'accumulateur et d'une feuille en polyarylethercetone (PAEK) (6.3, 60) dépourvue de plots métalliques et solidarisée à sa périphérie à la feuille en PAEK intégrant les deux plots métalliques, chacun des deux plots (40, 50) étant soudé à la partie (41, 51) d'un collecteur de courant contenue à l'intérieur de l'emballage.

6. Accumulateur électrochimique (A) selon la revendication 3, dans lequel l'emballage est constitué de deux feuilles en polyarylethercetone (PAEK) intégrant chacune dans son épaisseur un plot métallique constituant l'un des deux pôles de l'accumulateur, chacun des deux plots étant soudé à la partie d'un collecteur de courant contenue à l'intérieur de l'emballage.

7. Accumulateur électrochimique (A) selon l'une des revendications 5 ou 6, dans lequel les deux feuilles (60, 61) en polyarylethercetone (PAEK) sont d'épaisseur unitaire telles qu'elles sont rigides, l'une des feuilles (60) étant usinée pour constituer un fond de boitier pour contenir la cellule électrochimique, l'autre (61) des feuilles intégrant les plots métalliques (40, 50) constituant le couvercle du boitier.

8. Accumulateur électrochimique (A) selon l'une des revendications 1 à 7, dans lequel les deux parties d'une feuille en PAEK repliée sur elle-même ou les deux feuilles en PAEK sont solidarisées entre elles par auto collage, soudure, ultrasons, laser ou par thermo scellage.

9. Accumulateur électrochimique (A) selon l'une des revendications 1 à 8 constituant un accumulateur lithium-ion.

10. Emballage d'un accumulateur électrochimique (A) constitué d'une feuille (6.1, 6.2, 61) en polyarylethercetone (PAEK) intégrant dans son épaisseur au moins un plot métallique (40, 50).

11. Emballage d'un accumulateur électrochimique (A) selon la revendication 10, intégrant dans son épaisseur deux plots métalliques.

12. Emballage d'un accumulateur électrochimique (A)selon la revendication 10 ou 11, dans laquelle le(s) plot(s) métallique fait (font) saillie d'une hauteur au plus égale à 1mm, typiquement 250 µm par rapport à au moins une des faces de la feuille.

13. Emballage d'un accumulateur électrochimique (A) selon la revendication 12, dans laquelle le(s) plot(s) métallique a(ont) une hauteur sensiblement égale à l'épaisseur de la feuille.

14. Procédé de réalisation d'un emballage d'un accumulateur électrochimique (A) constitué d'une feuille ou d'une pluralité de feuille en polyarylethercetone (PAEK) intégrant dans son épaisseur au moins un plot métallique (40, 50), selon lequel on réalise les étapes suivantes :
a/ réalisation d'une ouverture dans l'épaisseur d'une feuille (6.1, 6.2, 61) en polyarylethercetone (PAEK),
b/ cryogénisation d'un barreau métallique (9) pour réduire sa section droite à des dimensions inférieures à celles de l'ouverture,
c/ introduction du barreau cryogénisé (9) dans l'ouverture de la feuille en polyarylethercetone (PAEK),
d/ maintien du barreau cryogénisé dans l'ouverture de la feuille à la température ambiante pour obtenir son ajustement avec serrage,
e/ coupure selon sa section droite du barreau dilaté et ajusté avec serrage dans l'ouverture de la feuille afin de constituer le plot métallique.

15. Procédé de réalisation d'un emballage d'accumulateur électrochimique (A) selon la revendication 14, selon lequel l'étape a/ est réalisée dans une seule feuille d'épaisseur telle qu'elle est rigide.

16. Procédé de réalisation d'un emballage d'accumulateur électrochimique (A) selon la revendication 15, selon lequel on réalise :
- l'étape c/ jusqu'à réaliser une connexion avec une partie de collecteur de courant agencée du côté de la feuille rigide opposé à celui de l'introduction du barreau,
- l'étape d/ en maintenant la connexion du barreau avec le collecteur de courant,
- l'étape e/ en coupant le barreau uniquement du côté de la feuille par lequel le barreau est introduit, le plot intégré à la feuille étant ainsi en outre connecté en permanence avec la partie de collecteur de courant.

17. Procédé de réalisation d'un emballage d'un accumulateur électrochimique (A) selon la revendication 14, selon lequel l'étape a/ est réalisée dans un empilement de feuilles (6.1, 6.2) d'épaisseur unitaire telles qu'elles sont souples, un intercalaire rigide (10) étant interposé entre deux feuilles souples.

## Patentansprüche

1. Elektrochemischer Akkumulator (A), umfassend wenigstens eine elektrochemische Zelle, die durch wenigstens eine Anode und eine Kathode auf beiden Seiten eines Elektrolyten gebildet ist, zwei Stromkollektoren, die jeweils durch eine Lamelle gebildet sind, von denen eine (4) mit der Anode und die andere (5) mit der Kathode verbunden ist, sowie ein Gehäuse, das dazu ausgelegt ist, die elektrochemische(n) Zelle(n) dicht aufzunehmen, jedoch von einem Teil der Lamellen durchsetzt zu werden, die die Pole bilden, die sich in der Ebene der elektrochemischen Zelle(n) erstrecken, wobei das Gehäuse durch eine einzige Folie aus Polyaryletherceton (PAEK) gebildet ist, die auf sich selbst in zwei Bereichen umgefaltet ist, welche an ihrem Umfang miteinander verbunden sind.

2. Elektrochemischer Akkumulator (A), umfassend wenigstens eine elektrochemische Zelle, die durch wenigstens eine Anode und eine Kathode auf beiden Seiten eines Elektrolyten gebildet ist, zwei Stromkollektoren, die jeweils durch eine Lamelle gebildet sind, von denen eine (4) mit der Anode und die andere (5) mit der Kathode verbunden ist, sowie ein Gehäuse, das dazu ausgelegt ist, die elektrochemische(n) Zelle(n) dicht aufzunehmen, jedoch von einem Teil der Lamellen durchsetzt zu werden, die die Pole bilden, die sich in der Ebene der elektrochemischen Zelle(n) erstrecken, wobei das Gehäuse durch eine Mehrzahl von Folien (6) aus Polyaryletherceton (PAEK) gebildet ist, die miteinander an ihrem Umfang (6') verbunden sind.

3. Elektrochemischer Akkumulator (A) nach Anspruch 1 oder 2, umfassend wenigstens eine Folie aus Polyaryletherceton (PAEK) (6.1, 6.2, 6.3), die in ihrer Dicke wenigstens einen metallischen Kontaktpunkt (40, 50) integral enthält, der einen der Pole des Akkumulators bildet, wobei dieser Kontaktpunkt an den Bereich (41, 51) eines Stromkollektors gelötet ist, der im Inneren des Gehäuses enthalten ist.

4. Elektrochemischer Akkumulator (A) nach Anspruch 3, bei dem das Gehäuse durch eine einzige Folie aus Polyaryletherceton (PAEK) gebildet ist, die in ihrer Dicke zwei metallische Kontaktpunkte integral enthält, die die zwei Pole des Akkumulators bilden, wobei die Folie auf sich selbst in zwei Bereichen umgefaltet ist, die miteinander an ihrem Umfang verbunden sind, wobei jeder der zwei Kontaktpunkte an den Bereich eines Stromkollektors gelötet ist, der im Inneren des Gehäuses enthalten ist.

5. Elektrochemischer Akkumulator (A) nach Anspruch 3, bei dem das Gehäuse durch eine Folie aus Polyaryletherceton (PAEK) (6.1, 61) gebildet ist, die in ihrer Dicke zwei metallische Kontaktpunkte (40, 50) integral enthält, die die zwei Pole des Akkumulators bilden, und eine Folie aus Polyaryletherceton (PAEK) (6.3, 60) ohne metallische Kontaktpunkte, die an ihrem Umfang mit der Folie aus PAEK verbunden ist, die die zwei metallischen Kontaktpunkte integral enthält, wobei jeder der zwei Kontaktpunkte (40, 50) an den Bereich (41, 51) eines Stromkollektors gelötet ist, der im Inneren des Gehäuses enthalten ist.

6. Elektrochemischer Akkumulator (A) nach Anspruch 3, bei dem das Gehäuse durch zwei Folien aus Polyaryletherceton (PAEK) gebildet ist, die jeweils in ihrer Dicke einen metallischen Kontaktpunkt integral enthalten, der einen der zwei Pole des Akkumulators bildet, wobei jeder der zwei Kontaktpunkte an den Bereich eines Stromkollektors gelötet ist, der im Inneren des Gehäuses enthalten ist.

7. Elektrochemischer Akkumulator (A) nach einem der Ansprüche 5 oder 6, bei dem die zwei Folien (60, 61) aus Polyaryletherceton (PAEK) von einheitlicher Dicke derart sind, dass sie starr sind, wobei eine der Folien (60) derart hergestellt ist, dass sie einen Boden des Gehäuses zum Aufnehmen der elektrochemischen Zelle bildet, wobei die andere (61) der Folien, die die metallischen Kontaktpunkte (40, 50) integral enthält, den Deckel des Gehäuses bildet.

8. Elektrochemischer Akkumulator (A) nach einem der Ansprüche 1 bis 7, bei dem die zwei Bereiche einer Folie aus PAEK, die auf sich selbst umgefaltet ist, oder die zwei Folien aus PAEK, miteinander verbunden sind durch Selbstverklebung, Schweißen, Ultraschall, Laser oder durch Heißsiegeln.

9. Elektrochemischer Akkumulator (A) nach einem der Ansprüche 1 bis 8, der einen Lithium-Ionen-Akkumulator bildet.

10. Gehäuse für einen elektrochemischen Akkumulator (A), gebildet durch eine Folie (6.1, 6.2, 61) aus Polyaryletherceton (PAEK), die in ihrer Dicke wenigstens einen metallischen Kontaktpunkt (40, 50) integral enthält.

11. Gehäuse für einen elektrochemischen Akkumulator (A) nach Anspruch 10, das in seiner Dicke zwei metallische Kontaktpunkte integral enthält.

12. Gehäuse für einen elektrochemischen Akkumulator (A) nach Anspruch 10 oder 11, bei dem der/die metallische Kontaktpunkt(e) bezüglich wenigstens einer der Seiten der Folie um eine Höhe von höchstens 1 mm, typischerweise 250 µm, vorsteht/vorstehen.

13. Gehäuse für einen elektrochemischen Akkumulator (A) nach Anspruch 12, bei dem der/die metallische Kontaktpunkt(e) eine Höhe im Wesentlichen gleich der Dicke der Folie hat/haben.

14. Verfahren zur Herstellung eines Gehäuses für einen elektrochemischen Akkumulator (A), gebildet durch eine Folie oder eine Mehrzahl von Folien aus Polyaryletherceton (PAEK), die in ihrer Dicke wenigstens einen metallischen Kontaktpunkt (40, 50) integral enthält/enthalten, wobei man die folgenden Schritte ausführt:
a/ Realisieren einer Öffnung in der Dicke einer Folie (6.1, 6.2, 61) aus Polyaryletherceton (PAEK),
b/ Abkühlen einer Metallstange (9), um ihren Querschnitt auf Abmessungen kleiner als jene der Öffnung zu verringern,
c/ Einführen der gekühlten Stange (9) in die Öffnung der Folie aus Polyaryletherceton (PAEK),
d/ Halten der gekühlten Stange in der Öffnung der Folie bei der Umgebungstemperatur, um ihre Spann-Einpassung zu erhalten,
e/ Abschneiden der ausgedehnten und in der Öffnung der Folie spanneingepassten Stange entlang ihrem Querschnitt, um den metallischen Kontaktpunkt zu bilden.

15. Verfahren zur Herstellung eines Gehäuses für einen elektrochemischen Akkumulator (A) nach Anspruch 14, bei dem der Schritt a/ bei einer einzigen Folie mit einer Dicke derart realisiert wird, dass sie starr ist.

16. Verfahren zur Herstellung einer Verpackung für einen elektrochemischen Akkumulator (A) nach Anspruch 15, bei dem man folgendes ausführt:
- den Schritt c/, bis eine Verbindung mit einem Bereich des Stromkollektors realisiert wird, der auf der Seite der starren Folie gegenüber jener des Einführens der Stange angeordnet ist,
- den Schritt d/ unter Beibehaltung der Verbindung der Stange mit dem Stromkollektor,
- den Schritt e/ durch Abschneiden der Stange ausschließlich auf der Seite der Folie, an der die Stange eingeführt wird, wobei der in der Folie integral enthaltene Kontaktpunkt somit ferner ständig mit dem Bereich des Stromkollektors verbunden ist.

17. Verfahren zur Herstellung eines Gehäuses für einen elektrochemischen Akkumulator (A) nach Anspruch 14, bei dem der Schritt a/ in einem Stapel von Folien (6.1, 6.2) mit einer einheitlichen Dicke derart realisiert wird, dass sie flexibel sind, wobei eine starre Zwischenlage (10) zwischen zwei flexiblen Folien eingefügt ist.

## Claims

1. An electrochemical accumulator (A) comprising at least one electrochemical cell (1) including at least one anode and one cathode either side of an electrolyte, two current collectors, each including a strip, one of which (4) is connected to the anode, and the other of which (5) to the cathode, and packaging designed to contain the electrochemical cell(s) in sealed fashion, whilst being traversed by a proportion of the strips forming the poles which extend in the plane of the electrochemical cell(s), in which the packaging includes a single polyarylethercetone (PAEK) sheet folded into two portions attached to one another at their periphery.

2. An electrochemical accumulator (A) comprising at least one electrochemical cell (1) including at least one anode and one cathode either side of an electrolyte, two current collectors, each including a strip, one of which (4) is connected to the anode, and the other of which (5) to the cathode, and packaging designed to contain the electrochemical cell(s) in sealed fashion, whilst being traversed by a proportion of the strips forming the poles which extend in the plane of the electrochemical cell(s), in which the packaging includes multiple polyaryletherketone (PAEK) sheets (6) attached to one another at their periphery (6').

3. An electrochemical accumulator (A) according to claim 1 or 2, comprising at least one polyarylethercetone (PAEK) sheet (6.1, 6.2, 6.3), incorporating within its thickness at least one metal stud constituting one of the poles of the accumulator, the said stud being welded to the portion (41, 51) of a current collector contained within the packaging.

4. An electrochemical accumulator (A) according to claim 3, in which the packaging includes a single polyaryletherketone (PAEK) sheet incorporating within it two metal studs constituting the two poles of the accumulator, where the said sheet is folded into two portions which are attached to one another at their periphery, and where each of the two studs is welded to the portion of a current collector contained within the packaging.

5. An electrochemical accumulator (A) according to claim 3, in which the packaging includes a single polyaryletherketone (PAEK) (6.1, 6.2) sheet incorporating within it two metal studs (40, 50) constituting the two poles of the accumulator and a polyaryletherketone (PAEK) sheet (6.3, 60) without metal studs, and attached at its periphery to the PAEK sheet, incorporating both metal studs, where each of the two studs (40, 50) is welded to the portion (41, 51) of a current collector contained within the packaging.

6. An electrochemical accumulator (A) according to claim 3, in which the packaging includes two polyaryletherketone (PAEK) sheets, each incorporating within it a metal stud constituting one of the poles of the accumulator, where each of the two studs is welded to the portion of a current collector contained within the packaging.

7. An electrochemical accumulator (A) according to claim 5, in which both polyaryletherketone (PAEK) sheets (60, 61) are of a unit thickness such that they are rigid, where one of the sheets (60) is machined to constitute a base of a case to contain the electrochemical cell, and where the other (61) of the sheets incorporates the metal studs (40, 60) constituting the cover of the case.

8. An electrochemical accumulator (A) according to claim 1, in which both portions of a PAEK sheet folded into two or both PAEK sheets are attached to one another by self-adhesion, bonding, ultrasound, laser or by heat sealing.

9. An electrochemical accumulator (A) according to claim 1 constituting a lithium-ion accumulator.

10. Packaging of an electrochemical accumulator (A) made of polyaryletherketone (PAEK) sheet (6.1, 6.2, 61) incorporating within it at least one metal stud (40, 50).

11. Packaging of an electrochemical accumulator (A) according to claim 10, incorporating two metal studs within it.

12. Packaging of an electrochemical accumulator (A) according to claim 10, in which the metal stud(s) protrude(s) by a height of at most equal to 1 mm, and typically equal to 250 µm, relative to at least one of the faces of the sheet.

13. Packaging of an electrochemical accumulator (A) according to claim 10, in which the height of the metal stud(s) is/are approximately equal to the thickness of the sheet.

14. A method for manufacturing a packaging of an electrochemical accumulator (A) made of one or a plurality of polyaryletherketone (PAEK) sheet incorporating within it at least one metal stud (40, 50), according to which the following steps are accomplished:
a/ forming of an opening within one polyaryletherketone (PAEK) sheet (6.1, 6.2, 61),
b/ freezing of a metal bar to reduce its straight section to dimensions smaller than those of the opening,
c/ introduction of the frozen bar (9) into the opening of the polyaryletherketone (PAEK) sheet,
d/ holding of the frozen bar in the opening of the sheet at ambient temperature until it is adjusted whilst tightening,
e/ cutting of the bar along its straight section, once it has expanded and adjusted whilst tightening in the opening of the sheet, to constitute the metal stud.

15. A method for manufacturing a packaging of an electrochemical accumulator (A) according to claim 14, according to which step a/ is accomplished in a single sheet of a thickness such that it is rigid.

16. A method for manufacturing a packaging of an electrochemical accumulator (A) according to claim 15, according to which the following actions are accomplished:
- step c/ until a connection is made with a portion of a current collector positioned on the side of the rigid sheet opposite that into which the bar was introduced,
- step d/, holding the connection of the bar with the current collector,
- step e/ by cutting the bar only on the side of the sheet through which the bar is introduced, where the stud incorporated in the sheet is thus also permanently connected with the portion of the current collector.

17. A method for manufacturing a packaging of an electrochemical accumulator (A) according to claim 14, according to which step a/ is accomplished in a stack of sheets (6.1, 6.2) of unit thickness such that they are flexible, where a rigid (10) divider is interposed between two flexible sheets.
